# EUROPÄISCHE PATENTANMELDUNG

(11) **EP 1 651 006 A2**
(43) Veröffentlichungstag der Anmeldung: **26.04.2006**
(21) Anmeldenummer: 05109560.2
(22) Anmeldetag: 14.10.2005
(51) Int. Cl.: H04R 25/02

(54) **Hörhilfegerät mit einer Leitungsschleife zur Kompensation induktiver Störfelder**

(30) Priorität: 20.10.2004 DE 102004051226
(71) Anmelder: Siemens Audiologische Technik GmbH, 91058 Erlangen (DE)
(72) Erfinder: Niederdränk, Torsten, 91056, Erlangen (DE); Nikles, Peter, 91054, Erlangen (DE)
(74) Vertreter: Berg, Peter

(57) **Zusammenfassung**

Bei einem Hörhilfegerät soll in einfacher Weise ein im Hörhilfegerät selbst erzeugtes, auf eine Sende- und/oder Empfangsantenne (7) wirkendes, elektromagnetisches Störfeld abgeschwächt oder kompensiert werden. Es wird hierzu vorgeschlagen, mit den Versorgungsleitungen (6C, 6D) des Hörhilfegerätes (1) gezielt Leitungsschleifen (8, 9) zu legen, so dass ein Gegenfeld zur Abschwächung oder Kompensation der am Ort der Sende- und/oder Empfangsantenne (7) vorhandenen Störfelder erzeugt wird.

## Beschreibung

Die Erfindung betrifft ein Hörhilfegerät mit Hörhilfegeräte-Komponenten, wie einem Eingangswandler zur Aufnahme eines Eingangssignals und Wandlung in ein elektrisches Signal, einer Signalverarbeitungseinheit zur Verarbeitung und Verstärkung des elektrischen Signals und einem Ausgangswandler zur Abgabe eines von einem Benutzer als akustisches Signal wahrnehmbaren Ausgangssignals und mit einer Spannungsquelle zur Spannungsversorgung der Hörhilfegeräte-Komponenten, wobei zwischen der Spannungsquelle und den zu versorgenden Hörhilfegeräte-Komponenten Versorgungsleitungen vorhanden sind.

Bei der Anwendung induktiver Übertragungssysteme in Hörhilfegeräten ist es notwendig, den Einfluss interner, d.h. im Hörhilfegerät selbst erzeugter Störungen gering zu halten. Innerhalb des Hörhilfegerätes erzeugte, elektromagnetische Störsignale belasten den Empfangspfad des Übertragungssystems, so dass nur solche externe Signale empfangen werden können, deren Signalstärke über die Signalstärke der Störsignale hinausgeht. Typische Quellen elektromagnetischer Störsignale sind der Hörer, der zumeist als magnetischer Wandler ausgeführt ist und starke induktive Störsignale abstrahlt. Weiterhin sind die Zuleitungen zu diesem Hörer zu erwähnen, aber auch die verschiedenen Verbindungsleitungen zur Hörgeräteelektronik, die durch den Stromfluss durch diese Leitungen als induktive Antennen angesehen werden müssen. Auch die Hörgeräteelektronik selbst imitiert elektromagnetische Störsignale und muss daher als Störsignalquelle betrachtet werden. Am Ort einer Empfangsantenne oder einer Empfangsspule eines Übertragungssystems zur drahtlosen Signalübertragung, das den induktiven Bereich oder auch den typischen RF-Bereich nutzt, wird die Überlagerung dieser zahlreichen, von den unterschiedlichen Störsignalquellen ausgehenden elektromagnetischen Störsignale empfangen.

Aus der DE 197 12 236 C1 ist ein Hörgerät mit einer Hörspule zur induktiven Aufnahme von Signalen bekannt. Um den Hörspulenklirrfaktor zu minimieren, wird vorgeschlagen, eine parallel- bzw. antiparallel zu der Hörspule befindliche Kompensations-Induktivität, z B. eine SMD-Kompensationsspule, zur Erzeugung eines Kompensationsfeldes einzusetzen.

Aufgabe der vorliegenden Erfindung ist es, durch einfach auszuführende, hörgeräteinterne Maßnahmen den Einfluss im Hörhilfegerät selbst hervorgerufener, elektromagnetischer Störungen auf ein Übertragungssystem zur drahtlosen Signalübertragung gering zu halten.

Diese Aufgabe wird bei einem Hörhilfegerät mit Hörhilfegeräte-Komponenten, wie einem Eingangswandler zur Aufnahme eines Eingangssignals und Wandlung in ein elektrisches Signal, einer Signalverarbeitungseinheit zur Verarbeitung und Verstärkung des elektrischen Signals und einem Ausgangswandler zur Abgabe eines von einem Benutzer als akustisches Signal wahrnehmbaren Ausgangssignals und mit einer Spannungsquelle zur Spannungsversorgung der Hörhilfegeräte-Komponenten, wobei zwischen der Spannungsquelle und den zu versorgenden Hörhilfegeräte-Komponenten Versorgungsleitungen vorhanden sind, dadurch gelöst, dass die Versorgungsleitungen wenigstens eine Leitungsschleife umfassen, um gezielt ein elektromagnetisches Störfeld in einem bestimmten Bereich innerhalb des Hörhilfegerätes abzuschwächen oder zu kompensieren.

Bei einem Hörhilfegerät wird mittels eines Eingangswandlers ein Eingangssignal aufgenommen und in ein elektrisches Eingangssignal überführt. Üblicherweise dient als Eingangswandler wenigstens ein Mikrofon, welches ein akustisches Eingangssignal aufnimmt. Moderne Hörhilfegeräte umfassen häufig ein Mikrofonsystem mit mehreren Mikrofonen, um einen von der Einfallsrichtung akustischer Signale abhängigen Empfang, eine Richtcharakteristik, zu erreichen. Die Eingangswandler können jedoch auch eine Telefonspule oder eine Antenne umfassen zur Aufnahme elektromagnetischer Eingangssignale. Die durch den Eingangswandler in elektrische Eingangssignale gewandelten Eingangssignale werden zur Weiterverarbeitung und Verstärkung einer Signalverarbeitungseinheit zugeführt. Die Weiterverarbeitung und Verstärkung erfolgt zum Ausgleich des individuellen Hörverlustes eines Hörhilfegeräteträgers in der Regel in Abhängigkeit der Signalfrequenz. Die Signalverarbeitungseinheit gibt ein elektrisches Ausgangssignal ab, welches über einen Ausgangswandler dem Gehör des Hörhilfegeräteträgers zugeführt wird, so dass dieser das Ausgangssignal als akustisches Signal wahrnimmt. Als Ausgangswandler werden üblicherweise Hörer verwendet, die ein akustisches Ausgangssignal erzeugen. Es sind jedoch auch Ausgangswandler zur Erzeugung mechanischer Schwingungen bekannt, die direkt bestimmte Teile des Gehörs, wie beispielsweise die Gehörknöchelchen zu Schwingungen anregen. Weiterhin sind Ausgangswandler bekannt, die direkt Nervenzellen des Gehörs stimulieren.

Bislang war es bei Hörhilfegeräten üblich, die Versorgungsleitungen zur Spannungsversorgung der einzelnen Komponenten des Hörhilfegerätes möglichst kurz zu halten, um die Abstrahlung elektromagnetischer Störsignale von diesen Leitungen möglichst gering zu halten. Nun wird vorgeschlagen, von dieser üblichen Vorgehensweise abzukehren und die Versorgungsleitungen "künstlich" zu verlängern, derart, dass diese vom Versorgungsstrom durchflossenen Versorgungsleitungen ein Gegenfeld erzeugen, das ein elektromagnetisches Störfeld an einem bestimmten Ort innerhalb des Hörhilfegerätes kompensiert oder zumindest abschwächt. Vorteilhaft erfolgt die Kompensation bzw. Abschwächung an dem Ort, an dem sich eine Antenne oder Induktionsspule zur drahtlosen Übertragung von Signalen von bzw. zu dem Hörhilfegerät befindet. Durch die so erzeugten Gegenfelder kann der Störpegel an der Empfangsantenne oder Empfangsspule eines im Hörhilfegerät integrierten Übertragungssystems zur drahtlosen Signalübertragung deutlich reduziert werden.

Die Erzeugung zusätzlicher, zur reinen Kontaktierung der unterschiedlichen Komponenten des Hörhilfegerätes nicht erforderlicher Leitungsschleifen bedingt kein zusätzliches, in das Hörhilfegerät einzusetzendes Bauteil. Der Herstellungsaufwand für ein derartiges Hörhilfegerät wird daher nur unwesentlich erhöht. Die Leitungsschleifen können in ihrer Größe und Ausrichtung leicht variiert werden, so dass das erzeugte Gegenfeld in einfacher Weise hinsichtlich seiner Feldstärke und Ausrichtung eingestellt werden kann. Vorteilhaft werden eine oder mehrere Leitungsschleifen um ein bestimmtes Bauteil innerhalb des Hörhilfegerätes, beispielsweise ein Hybrid-Bauteil, herumgelegt, was die Erzeugung der Leitungsschleife zusätzlich vereinfacht. Darüber hinaus ist dadurch die von der Leitungsschleife umgebene Fläche verhältnismäßig genau festgelegt, die letztlich die Stärke des erzeugten Gegenfeldes bestimmt.

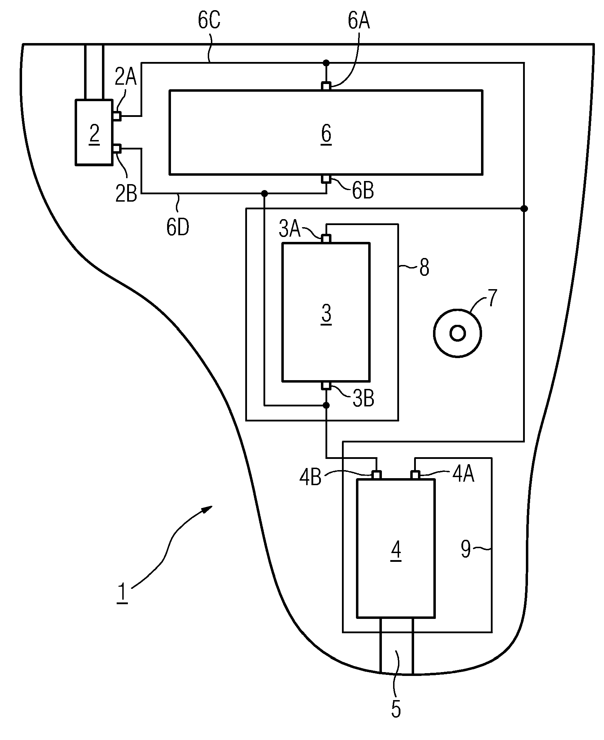

Die Erfindung wird nachfolgend anhand eines Ausführungsbeispiels näher erläutert. Dabei zeigt die Figur ein Hörhilfegerät 1 mit einem Mikrofon 2 zur Aufnahme eines akustischen Eingangssignals und Wandlung in ein elektrisches Signal, das dann zur Weiterverarbeitung und Verstärkung einer als Hybrid-Bauelement ausgebildeten Signalverarbeitungseinheit 3 zugeführt ist. Das Ausgangssignal der Signalverarbeitungseinheit 3 wird schließlich mittels eines Hörers 4 in ein akustisches Signal gewandelt und über einen Schallkanal 5 in den Gehörgang eines Benutzers abgegeben. Das Hörhilfegerät 1 umfasst eine Antenne 7 zur drahtlosen Übertragung elektromagnetischer Signale zwischen dem Hörhilfegerät 1 und einem weiteren Gerät, beispielsweise einem zweiten Hörhilfegerät gleicher Bauart zur binauralen Versorgung des Benutzers.

Zur Spannungsversorgung des Hörhilfegerätes ist eine Batterie 6 mit den Batteriepolen 6A und 6B vorgesehen. Zwischen den Batteriepolen 6A und 6B und Kontakten 2A und 2B des Mikrofons 2, Kontakten 3A und 3B des Hybrid-Bauelementes 3 und Kontakten 4A und 4B des Hörers 4 sind Versorgungsleitungen 6C und 6D vorhanden. Wie der schematischen Darstellung zu entnehmen ist, führen die Versorgungsleitungen nicht auf dem kürzesten Weg zu dem Hybrid-Bauelement 3 bzw. dem Hörer 4. Stattdessen ist um das Hybrid-Bauelement 3 sowie die Antenne 7 jeweils eine Leitungsschleife 8 bzw. 9 gelegt, so dass von den Versorgungsleitungen 6C, 6D bzw. von den Bauelementen 3 bzw. 4 hervorgehende elektromagnetische Störfelder am Ort der Spule 7 kompensiert werden. Dies erhöht die Empfindlichkeit des Hörhilfegerätes 1 beim Empfang elektromagnetischer Signale externer Geräte.

Die Figur zeigt lediglich ein schematisches, stark vereinfachtes Ausführungsbeispiel der Erfindung. Selbstverständlich sind auch andere Geometrien und Ausrichtungen der Leitungsschleifen gemäß der Erfindung von der Erfindung umfasst. Weiterhin können die Leitungsschleifen 8 und 9 auch mehrere Windungen aufweisen. Darüber hinaus kann anstatt der Antenne 7 auch eine Hörspule (nicht dargestellt) zum Empfang elektromagnetischer Signale vorhanden sein.

## Patentansprüche

1. Hörhilfegerät (1) mit Hörhilfegeräte-Komponenten, wie einem Eingangswandler zur Aufnahme eines Eingangssignals und Wandlung in ein elektrisches Signal, einer Signalverarbeitungseinheit zur Verarbeitung und Verstärkung des elektrischen Signals und einem Ausgangswandler zur Abgabe eines von einem Benutzer als akustisches Signal wahrnehmbaren Ausgangssignals und mit einer Spannungsquelle (6) zur Spannungsversorgung der Hörhilfegeräte-Komponenten, wobei zwischen der Spannungsquelle (6) und den zu versorgenden Hörhilfegeräte-Komponenten Versorgungsleitungen (6C, 6D) vorhanden sind, **dadurch gekennzeichnet, dass** die Versorgungsleitungen (6C, 6D) wenigstens eine Leitungsschleife (8, 9) umfassen, um gezielt ein elektromagnetisches Störfeld in einem bestimmten Bereich innerhalb des Hörhilfegerätes (1) abzuschwächen oder zu kompensieren.

2. Hörhilfegerät nach Anspruch 1, wobei die Leitungsschleife (8, 9) um ein Hybrid-Bauteil (3) geführt ist.

3. Hörhilfegerät nach Anspruch 1 oder 2, wobei die Leitungsschleife (9) um den Hörer (4) geführt ist.

4. Hörhilfegerät nach einem der Ansprüche 1 bis 3, wobei mehrere Leitungsschleifen (8, 9) vorhanden sind.

5. Hörhilfegerät nach einem der Ansprüche 1 bis 4, wobei die Leitungsschleife (8, 9) das Störfeld im Bereich einer Sende- und/oder Empfangsantenne (7) oder eine Sende- und/oder Empfangsspule abschwächt oder kompensiert.
